# EUROPÄISCHE PATENTSCHRIFT

(11) **EP 2 298 141 B1**
(45) Veröffentlichungstag und Bekanntmachung des Hinweises auf die Patenterteilung: **02.07.2014**
(21) Anmeldenummer: 10009479.6
(22) Anmeldetag: 13.09.2010
(51) Int. Cl.: A47J 31/08, B26D 1/22, B26F 1/38

(54) **Verfahren und Vorrichtung zum Herstellen von Kaffeefiltern**
Device and method for manufacturing coffee filters
Procédé et dispositif de fabrication de filtres à café

(30) Priorität: 17.09.2009 DE 102009044037
(43) Veröffentlichungstag der Anmeldung: 23.03.2011
(73) Patentinhaber: BIKOMA AG Spezialmaschinen, 56727 Mayen/Eifel (DE)
(72) Erfinder: Hilger, Walter, 56736 Kottenheim (DE); Göbel, Bernd, 56761 Gamlen (DE); Stoye, Hartmut, 56727 Mayen (DE)
(74) Vertreter: Lemcke, Brommer & Partner Patentanwälte Partnerschaft mbB

(56) Entgegenhaltungen:
- EP-A2- 0 305 657
- FR-A1- 2 537 055

## Beschreibung

Die Erfindung betrifft ein Verfahren zum kontinuierlichen Herstellen von Filtern, insbesondere Kaffeefiltern und dergleichen aus einer Materialbahn, umfassend die Schritte: Schneiden parallel zur Transportrichtung der Materialbahn zum Trennen von zumindest zwei sich parallel zur Transportrichtung der Materialbahn erstreckender Reihen von Filterkonturen in jeweils eine Teilmaterialbahn und Vereinzeln der Filter der jeweiligen Teilmaterialbahnen.

Die Erfindung betrifft ein weiteres Verfahren zum kontinuierlichen Herstellen von Filtern, insbesondere Kaffeefiltern und dergleichen aus einer Materialbahn gemäß dem Oberbegriff des Anspruches 1.

Die Erfindung betrifft ebenfalls eine Vorrichtung zum kontinuierlichen Herstellen von Filtern, insbesondere Kaffeefiltern und dergleichen aus einer Materialbahn, umfassend Mittel zum Trennen von zumindest zwei sich parallel zur Transportrichtung der Materialbahn erstreckender Reihen von Filterkonturen in jeweils eine Teilmaterialbahn und Mittel zum Vereinzeln der Filter der Teilmaterialbahnen.

Ein Verfahren nach dem Oberbegriff des Anspruchs 1 und entsprechende Vorrichtung sind aus der EP 0 305 657 bekannt.

Im Stand der Technik ist es bisher bekannt, in eine sich kontinuierlich bewegende Materialbahn zunächst in zwei parallel sich zur Transportrichtung erstreckenden Reihen von aufgeklappten Konturen von zu schneidenden Filtern Öffnungshilfen für die später zu schneidenden Filter in die jeweiligen Konturender Filter zu schneiden. Die Materialbahn wird dabei im Wesentlichen gleichzeitig in zwei gleich große Teilmaterialbahnen durch einen kontinuierlichen geraden Schnitt entlang der Mitte der Materialbahn parallel zur Transportrichtung getrennt. Die beiden Teilmaterialbahnen werden dann üblicherweise über ein Faltdreieck geführt, so dass die Konturen der Filter zusammengeklappt werden. Anschließend werden diese teilweise entlang Ihrer zusammengeklappten Kontur durch Prägenähte miteinander verbunden. Nach dem Verbinden werden die Filter dann in einem letzten Schritt vereinzelt, indem sie entlang ihrer zusammengeklappten Kontur ausgeschnitten werden.

Die Materialbahn ist dabei breiter als die maximale Breite der später daraus hergestellten Filter, so dass dabei mehrere Filter nebeneinander (d. h. senkrecht zur Transportrichtung) aus der Materialbahn hergestellt werden können.

Nachteilig dabei ist, dass durch das genannte Ausschneiden der Filterkonturen Abfall entsteht, der einen wesentlichen Anteil am einzusetzenden Material für die Herstellung der Filter bildet. Weiterhin sind für jede Materialbahn bzw. Teilmaterialbahn Schneidwerkzeuge für die Öffnungshilfen, für die Trennung der Materialbahn und für das Vereinzeln der Filter aus den Teilmaterialbahnen erforderlich. Dementsprechend sind die Herstellungskosten für die Filter hoch.

Die Aufgabe der vorliegenden Erfindung ist es daher Verfahren und Vorrichtungen zur Verfügung zustellen, welche den benötigten Materialeinsatz und die Kosten für die Herstellung der Filter reduzieren ohne den Herstellungsprozess insgesamt zu erschweren.

Die Aufgabe wird hinsichtlich des Verfahrens gelöst durch die Merkmale des Anspruchs 1 und hinsichtlich der Vorrichtung durch die Merkmale des Anspruchs 7. Vorteilhafte Ausgestaltungen sind den abhängigen Ansprüchen zu entnehmen.

Durch das Schneiden mit einem wellenförmigen Schnitt ist es möglich, die später zu schneidenden Filter zumindest teilweise direkt entlang ihrer aufgeklappten Kontur vom Rest der Material- bzw. Teilmaterialbahn zu trennen. Die im Gegensatz zu einem geraden Trennungsschnitt so ausgesparten Bereiche der Materialbahn können dann dazu benutzt werden, weitere Umrisskonturen von anderen Gegenständen in diesem Bereich anzuordnen und zu schneiden, so dass bei gleicher Breite der Materialbahn mehr Gegenstände daraus hergestellt werden können. Damit sinken die Herstellungskosten insgesamt.

Die zumindest zwei Teilmaterialbahnen werden derart übereinander angeordnet, dass das Vereinzeln der Filter der Teilmaterialbahnen durch einen gemeinsamen Schnitt erfolgt. Nach dem Trennen der Materialbahn werden die zwei Teilmaterialbahnen erfindungsgemäß übereinander geführt, d. h. in zwei zueinander parallelen Ebenen. Nach Ausgleich eventueller Versetzungen der Teilmaterialbahnen bzw. der zu schneidenden Filter entlang ihrer jeweiligen Konturen zueinander, werden die Filter der zwei übereinanderliegenden Teilmaterialbahnen durch ein gemeinsames Schneidwerkzeug gleichzeitig aus den Teilmaterialbahnen ausgeschnitten und so vereinzelt. Auf diese Weise ist ein separates Schneidwerkzeug für die zweite Teilmaterialbahn für das Vereinzeln der Filter unnötig. Die Herstellungskosten für die Filter werden dadurch wesentlich gesenkt.

Erfindungsgemäß umfasst das Verfahren das Schneiden einer Öffnungshilfe in die Kontur zumindest eines Filters einer jeden Reihe, wobei insbesondere das Schneiden der Öffnungshilfe spiegelsymmetrisch zur Mittelachse der Materialbahn erfolgt. Wird eine Öffnungshilfe geschnitten, kann der Filter anschließend bei seinem Gebrauch einfacher geöffnet werden für den Einsatz bspw. in einer Kaffeemaschine. Wird die Öffnungshilfe spiegelsymmetrisch zur Mittelachse der Materialbahn geschnitten, wird auf diese Weise vermieden, dass die zweite Teilmaterialbahn zusätzlich noch um 180 Grad gedreht werden muss, damit die zu schneidenden Filter der jeweiligen Teilmaterialbahnen mit ihrer jeweiligen Kontur direkt übereinander liegen und so in einem einzigen Schnitt vereinzelt werden können.

Vorteilhafterweise verläuft der wellenförmige Schnitt beim Transport der Materialbahn abwechselnd im Wesentlichen teilweise parallel zur Kontur eines Filters der einen Reihe und teilweise parallel zur Kontur eines Filters der anderen Reihe. Durch den wellenförmigen Verlauf des Schnitts wird auf diese Weise zunächst ein Teil einer Kontur eines Filters unter minimalem Materialeinsatz von dem Rest der Materialbahn getrennt ausgeschnitten, anschließend wird ein Teil einer benachbarten Kontur eines Filters wiederum vom Rest der Materialbahn getrennt. Dadurch wird der durch den Schnitt nicht beaufschlagte Bereich weiter optimiert bzw. vergrößert, so dass auch größere Gegenstände in diesem Bereich angeordnet, später ausgeschnitten und vereinzelt werden können. Dies senkt sowohl den Materialverbrauch als auch die Herstellungskosten für die Filter bzw. die Gegenstände.

Zweckmäßigerweise erfolgen das Schneiden der Öffnungshilfe und das Trennen der zumindest zwei Reihen in jeweilige Teilmaterialbahnen gemeinsam durch den Schnitt mit wellenförmigem Verlauf. Bei Filtern mit Öffnungshilfe muss üblicherweise zusätzlich eine Öffnungshilfe für den Filter in die Kontur des Filters geschnitten werden. Erfolgt das Schneiden der Öffnungshilfe und das Trennen der zumindest zwei Reihen in jeweilige Teilmaterialbahnen gemeinsam durch den wellenförmigen Schnitt, kann jeweils ein hierfür sonst separat notwendiges Schneidwerkzeug eingespart werden, was deutliche Kostenvorteile bei der Herstellung der Filter ermöglicht.

Vorteilhafterweise erfolgt das Schneiden der Öffnungshilfen in den jeweiligen Reihen parallel zur Transportrichtung versetzt zueinander. Damit ist es möglich, die Öffnungshilfe für den Filter der benachbarten Reihe von Konturen zu schneidender Filter in die jeweils durch den wellenförmigen Schnitt ausgesparten Bereiche der ersten Reihe von Filtern anzuordnen. Insgesamt wird dadurch der Materialverbrauch beim Herstellen der Filter weiter gesenkt.

Um die Materialersparnis noch weiter zu erhöhen, ist es vorteilhaft, dass das Schneiden zum Trennen der zumindest beiden Reihen derart erfolgt, so dass die Summe der maximalen Breiten der Teilmaterialbahn größer ist als die Breite der Materialbahn. Die wellenförmige Schnittkante verläuft dadurch dann in hinreichendem, aber möglichst kleinen Abstand entlang der Kontur des einen Filters und geht dann direkt über zu einem Verlauf entlang der Kontur des anderen Filters, so dass insgesamt in Transportrichtung der Materialbahn teilweise um die Filter "herumgeschnitten" wird. Die Materialersparnis für die Materialbahn ergibt sich dann aus dem Überlapp der jeweiligen maximalen Breite der Teilmaterialbahn, d. h. um die gleiche Anzahl von Filtern zu schneiden, kann insgesamt eine geringe Materialbahnbreite verwendet werden.

Eine Vorrichtung zum kontinuierlichen Herstellen von Filtern, insbesondere Kaffeefiltern und dergleichen aus einer Materialbahn, insbesondere geeignet zum Durchführen des erfindungsgemäßen Verfahrens, umfasst Mittel zum Trennen von zumindest zwei sich parallel zur Transportrichtung der Materialbahn erstreckender Reihen von Filterkonturen in jeweils eine Teilmaterialbahn und Mittel zum Vereinzeln der Filter der Teilmaterialbahnen. Die Vorrichtung löst die erfindungsgemäße Aufgabe dadurch, dass die Mittel zum Trennen der zumindest zwei Reihen von Filterkonturen Mittel zur Erzeugung eines wellenförmigen Schnitts umfassen. Durch die wellenförmige Schnittkante ist es möglich, größere ungeschnittene Bereiche der Materialbahn zur Verfügung zu stellen, so dass diese Bereiche für weitere Konturen von zu schneidenden Gegenständen genutzt werden können; insgesamt wird damit die Ausnutzung der Materialbahn hinsichtlich des zur Verfügung stehenden Platzes optimiert. Erfindungsgemäß umfassen die Mittel zum Trennen Mittel zum Schneiden von Öffnungshilfen für zumindest einen Filter einer Teilmaterialbahn, insbesondere für jeweils zumindest einen Filter beider Teilmaterialbahnen. Auf diese Weise ist es mit einem einzigen Schnitt möglich, sowohl eine Öffnungshilfe für zumindest einen Filter zu schneiden, als auch die Materialbahn in zumindest zwei Teilmaterialbahnen zu schneiden. Sonst separat notwendige Schneidwerkzeuge für die Öffnungshilfen beider Reihen können damit eingespart werden, was erhebliche Kostenvorteile mit sich bringt.

Eine weitere Vorrichtung zum kontinuierlichen Herstellen von Filtern, insbesondere Kaffeefiltern und dergleichen aus einer Materialbahn insbesondere geeignet zum Durchführen des erfindungsgemäßen Verfahrens löst die erfindungsgemäße Aufgabe dadurch, daß Mittel zum Vereinzeln der Filter der jeweiligen Teilmaterialbahnen ein Schneidwerkzeug, insbesondere ein Messer zum gleichzeitigen Vereinzeln der Filter der beiden Teilmaterialbahnen umfassen. Durch die Anordnung nur eines Schneidwerkzeugs, um die Filter der beiden Teilmaterialbahnen gemeinsam zu vereinzeln, kann ein zusätzliches Schneidwerkzeug für die zweite Teilmaterialbahn entfallen; die Herstellungskosten der Filter werden damit erheblich gesenkt. Vorteilhafterweise umfassen die Mittel zur Erzeugung eines wellenförmigen Schnitts ein Schneidwerkzeug, welches zumindest teilweise im Wesentlichen parallel zur Kontur eines Filters der einen Reihe von Filtern und/oder teilweise im Wesentlichen parallel zur Kontur des zweiten Filters der zweiten Reihe von Filtern schneidet. Damit werden die Bereiche der Materialbahn, die zusätzlich für weitere Konturen von auszuschneidenden Gegenständen genutzt werden können, weiter vergrößert bzw. optimiert.

Um eine gleichmäßigere Belastung der Materialbahn zu erreichen und gleichzeitig den Materialverbrauch weiter zu verringern ist es zweckmäßig, dass die Mittel zum Schneiden der Öffnungshilfen derart angeordnet sind, so dass das Schneiden der Öffnungshilfen der jeweiligen Reihen jeweils parallel in Transportrichtung der Materialbahn versetzt erfolgt.

Weitere Merkmale und Vorteile der Erfindung ergeben sich aus der nachfolgenden Beschreibung eines Ausführungsbeispieles anhand der Zeichnungen. Dabei zeigt
- Figur 1: eine Materialbahn mit zu schneidenden Filterkonturen gemäß dem Stand der Technik und
- Figur 2: eine Materialbahn mit zu schneidenden Filterkonturen mit erfindungsgemäßem Schnitt mit wellenförmigem Verlauf.

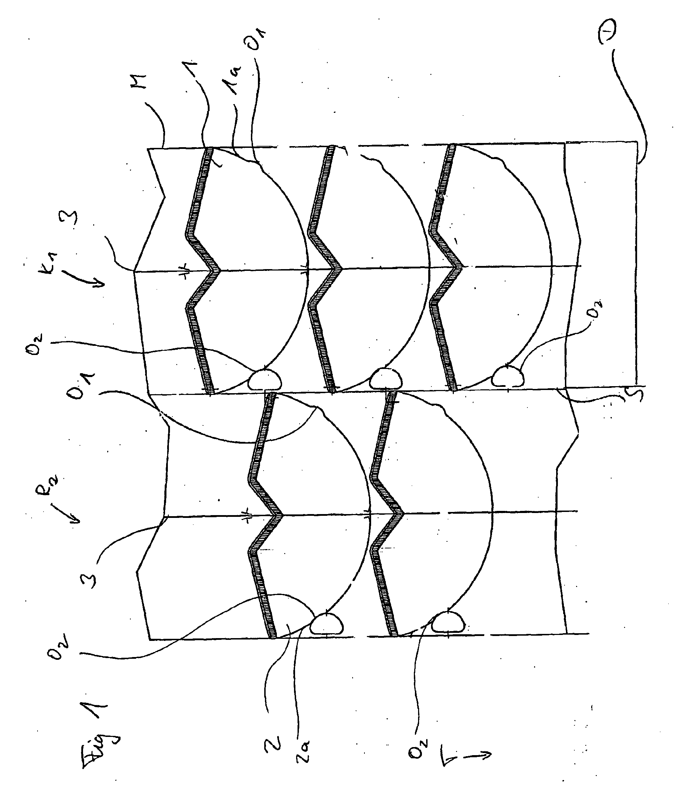

In Figur 1 ist ein Ausschnitt einer kontinuierlich ablaufenden Materialbahn M gezeigt mit zwei sich parallel zur Transportrichtung T erstreckenden Reihen R₁, R₂ von Konturen 1a, 2a von zu schneidenden Kaffeefiltern 1, 2. Die Konturen 1 a, 2a weisen dabei die Form eines aufgeklappten Kaffeefilters 1, 2 auf. Dabei sind die Konturen 2a der zu schneidenden Kaffeefilter 2 der Reihe R₂ parallel zur Transportrichtung T versetzt gegenüber den Konturen 1 a der Kaffeefilter 1 der Reihe R₁ angeordnet.

Die Kontur 1a, 2a der Kaffeefilter 1, 2 umfasst in ihrem jeweils rechten Bereich (gemäß Figur 1) ausgehend von ihrer Faltachse 3 eine Ausbuchtung O₁ in radialer Richtung nach außen. Auf der jeweils gegenüberliegenden Seite symmetrisch zur Faltachse 3 ist dagegen eine radiale Einbuchtung O₂ angeordnet, die mittels eines separaten Schneidwerkzeugs vor dem Falten und Vereinzeln der Kaffeefilter 1, 2 in die aufgeklappte Kontur 1a, 2a der Kaffeefilter 1, 2 geschnitten wird. Klappt man nun die Kaffeefilter 1, 2 um ihre Symmetrie- bzw. Faltachse 3, nachdem man die beiden Reihen R₁, R₂ in zwei Teilmaterialbahnen R₁, R₂ mittels eines geraden Schnitts S getrennt hat, zu ihrer Herstellung zusammen, ergibt sich somit insgesamt eine Öffnungshilfe O₁, O₂ für den Kaffeefilter 1,2.

Die Breite D der Reihen R₁, R₂ bzw. nach dem Trennen der Reihen der Teilmaterialbahnen R₁, R₂ entspricht dabei im wesentlichen der maximalen Breite der Kontur 1a, 2a der Kaffeefilter 1, 2. Nach dem Zusammenklappen bzw. Falten der Kaffeefilter 1, 2 werden diese teilweise entlang ihrer aufeinanderliegenden Konturen bzw. Kanten durch eine Prägenaht P verbunden und aus ihren jeweiligen Teilmaterialbahnen R₁, R₂ mit jeweiligen Schneidwerkzeugen vereinzelt.

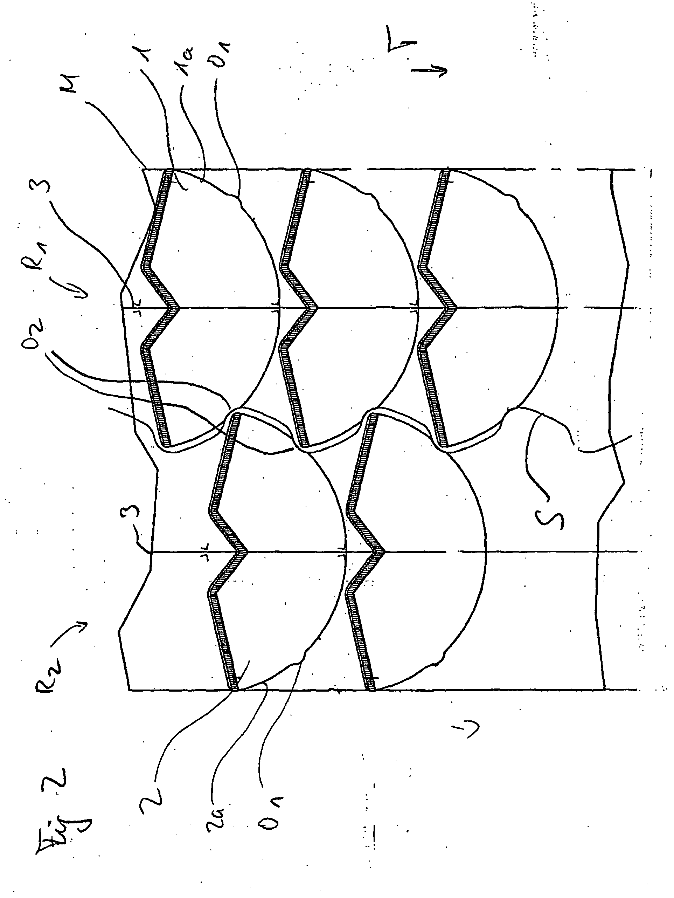

In Figur 2 ist ein Ausschnitt einer kontinuierlich ablaufenden Materialbahn M gezeigt mit einem Schnittmuster gemäß einem erfindungsgemäßen Verfahren bzw. erzeugt mittels einer erfindungsgemäßen Vorrichtung. Wie in Figur 1 sind Konturen 1a, 2a von aufgeklappten Kaffeefiltern 1, 2 in zwei sich parallel zur Transportrichtung T erstreckenden Reihen R₁, R₂ angeordnet. Die Kaffeefilter 1,2 weisen im Wesentlichen Halbkreisform auf, wobei der im Wesentlichen gebogene Bereich jeweils in Transportrichtung T orientiert ist. Im Unterschied zu Figur 1 werden die Öffnungshilfen O₂ achssymmetrisch (Achse parallel zur Transportrichtung T) geschnitten, so dass die Ausbuchtung O₁ der Kontur 1a der Kaffeefilter 1 der Reihe R₁ zum äußeren rechten Rand der Materialbahn M zeigt, wohingegen die Ausbuchtung O₁ der Konturen 2a der Kaffeefilter 2 der Reihe R₂ in Richtung des linken äußeren Randes der Materialbahn M orientiert ist. Die Einbuchtungen O₂ der Öffnungshilfen sind in Richtung des Inneren der Materialbahn M, d. h. zur Mitte der Materialbahn M hin, orientiert und werden durch den Schnitt S mit wellenförmigem Verlauf in die Kontur 1a, 2a der Kaffeefilter 1 , 2 geschnitten. Gleichzeitig trennt der Schnitt S auch die Materialbahn M in die zwei Teilmaterialbahnen R₁, R₂.

Die Konturen 1a, 2a der Kaffeefilter 1, 2 der Reihen R₁, R₂ sind auf der Materialbahn M in horizontaler Richtung T versetzt angeordnet, um im Wesentlichen der Hälfte der Erstreckung der Kontur 1a, 2a der Kaffeefilter 1,2 parallel zur Transportrichtung T. Weiterhin sind die Kaffeefilter 1, 2 derart angeordnet, so dass die aufgeklappte Kontur 2a der Kaffeefilter 2 zumindest teilweise in den Zwischenbereich zweier in Transportrichtung T aufeinander folgender aufgeklappter Konturen 1a von Kaffeefiltern 1 der Reihe R₁ hineinragt.

Die Schnittkante des wellenförmigen Schnittes S verläuft im Wesentlichen entlang der Transportrichtung in der Mitte der Materialbahn M. Aus Figur 2 ist dieser Verlauf des Schnitts S zum Trennen der Materialbahn M und zum Schneiden der Öffnungshilfe O₂ zu erkennen: Der Schnitt S folgt in Figur 2 von unten nach oben (hier ab dem Punkt B) in einem vorgegebenen geringstmöglichen Abstand im Wesentlichen parallel zur und links von der zu schneidenden aufgeklappten Kontur 1a eines Kaffeefilters 1 und geht dann über zu der aufgeklappten Kontur 2a eines Kaffeefilters 2 der Reihe R₂, schneidet eine Einbuchtung O₂ in die aufgeklappte Kontur 2a des Kaffeefilters 2, verläuft dann weiter im Wesentlichen parallel rechts mit vorgegebenem kleinem Abstand von der aufgeklappten Kontur 2a des Kaffeefilters 2 der Reihe R₂ entlang bis zu der aufgeklappten Kontur 1a eines nachfolgenden Kaffeefilters 1a der Reihe R₁, schneidet in diesen eine Einbuchtung O₂ und verläuft dann weiter im wesentlichen parallel links mit kleinem vorgegebenem Abstand zur aufgeklappten Kontur 1a des Kaffeefilters 1 und trifft dann weiter auf die aufgeklappten Kontur 2a eines schräg oberhalb von Kaffeefilter 1 angeordneten Kaffeefilters 2 und schneidet in die aufgeklappte Kontur 2a des Kaffeefilters 2 eine Einbuchtung O₂ und so weiter. Die Schnittkante des Schnitts S verläuft also im Wesentlichen wellenförmig entlang der Transportrichtung T in der Mitte der Materialbahn M und der Schnitt S schneidet jeweils abwechselnd Einbuchtungen O₂ für Öffnungshilfen in die aufgeklappten Konturen 1a der einen Reihe R₁ von Kaffeefiltern 1 und in die aufgeklappten Konturen 2a der anderen Reihe R₂ von Kaffeefiltern 2 und trennt gleichzeitig die Materialbahn M in zwei Teilmaterialbahnen R₁, R₂.

Das erfindungsgemäße Verfahren läuft nun wie folgt ab: Zunächst wird die Materialbahn M durch den erfindungsgemäßen wellenförmigen Schnitt S in zwei Teilmaterialbahnen R₁, R₂ getrennt. Gleichzeitig verläuft der wellenförmige Schnitt S teilweise im Bereich der aufgeklappten Kontur 1a, 2a von zu schneidenden Kaffeefiltern 1, 2 und schneidet abwechselnd Einbuchtungen O₂ für eine Öffnungshilfe für die Kaffeefilter 1,2 der einen und der anderen Reihe R₁, R₂ in die Materialbahn M /Teilmaterialbahnen R₁, R₂. Damit kann ein Schneidwerkzeug eingespart werden.

Nach dem Trennen der Materialbahn M werden die Teilmaterialbahnen R₁, R₂ dann jeweils um ihre die Falt- bzw. Symmetrieachse 3 gefaltet bspw. mittels eines Faltdreiecks. Teilweise werden dann die aufeinanderliegenden Kanten der Kontur 1a, 2a der jeweiligen Kaffeefilter 1,2 mittels einer Prägenaht P miteinander verbunden. Anschließend werden die Teilmaterialbahnen R₁, R₂ so übereinander geführt, so dass die zu schneidenden zusammengeklappten und teilweise verprägten Konturen 1a, 2a der Filter 1,2 jeweils direkt übereinander liegen. Die beiden Teilmaterialbahnen R₁, R₂ werden dann weiter durch ein Schneidwerkzeug geführt, welches dann die jeweiligen Konturen 1a, 2a der Kaffeefilter 1, 2 auf den jeweiligen Teilmaterialbahnen R₁, R₂ durch einen einzigen Schnitt schneidet und so die Kaffeefilter 1,2 der Teilmaterialbahnen R₁, R₂ gleichzeitig vereinzelt.

Zusammenfassend hat die Erfindung mehrere Vorteile. Durch die Erfindung wird eine Materialersparnis bei der Herstellung von Filtern, insbesondere Kaffeefiltern möglich. Des Weiteren werden die Herstellungskosten gesenkt, weil die Anzahl der Schneidwerkzeuge für die Herstellung der Kaffeefilter verringert werden kann.

## Patentansprüche

1. Verfahren zum kontinuierlichen Herstellen von Filtern, insbesondere Kaffeefiltern und dergleichen aus einer Materialbahn,
umfassend die Schritte
a. Schneiden parallel zur Transportrichtung (T) der Materialbahn (M) zum Trennen von zumindest zwei sich parallel zur Transportrichtung (T) der Materialbahn (M) erstreckenden Reihen (R₁, R₂) von Filterkonturen (1 a, 2a) in jeweils eine Teilmaterialbahn (R₁, R₂) und
b. Vereinzeln der Filter der jeweiligen Teilmaterialbahnen (R₁, R₂),
wobei das Scheiden zum Trennen der zumindest zwei Reihen (R₁, R₂) in jeweils eine Teilmaterialbahn (R₁, R₂) im Wesentlichen anhand eines Schnitts (S) mit wellenförmigem Verlauf erfolgt,
**dadurch gekennzeichnet, dass**
das Verfahren das Schneiden einer Öffnungshilfe (O₂) in die Kontur (1a, 2a) zumindest eines Filters (1, 2) einer jeden Reihe (R₁, R₂) umfasst.

2. Verfahren nach Anspruch 1,
**dadurch gekennzeichnet, dass**
die zumindest zwei Teilmaterialbahnen (R₁, R₂) derart übereinander angeordnet werden, sodass das Vereinzeln der Filter (1, 2) der jeweiligen Teilmaterialbahnen (R₁, R₂) durch einen gemeinsamen Schnitt (S) erfolgt.

3. Verfahren nach einem der Ansprüche 1 und 2,
**dadurch gekennzeichnet, dass**
das Schneiden der Öffnungshilfe (O₂) spiegelsymmetrisch zur Mittelachse der Materialbahn (M) erfolgt.

4. Verfahren nach zumindest einem der Ansprüche 1 bis 3,
**dadurch gekennzeichnet, dass**
der wellenförmige Schnitt (S) abwechselnd im Wesentlichen teilweise parallel zur Kontur (1a, 2a) eines Filters (1, 2) der einen Reihe (R₁, R₂) und teilweise parallel zur Kontur (1a, 2a) eines Filters (1, 2) der anderen Reihe (R₁, R₂) der Filter (1, 2) verläuft.

5. Verfahren nach zumindest einem der Ansprüche 1 bis 4,
**dadurch gekennzeichnet, dass**
das Schneiden der Öffnungshilfe (O₂) und das Trennen der zumindest zwei Reihen (R₁, R₂) in jeweilige Teilmaterialbahnen (R₁, R₂) gemeinsam durch den Schnitt (S) mit wellenförmigem Verlauf erfolgt.

6. Verfahren nach zumindest einem der Ansprüche 1 bis 5,
**dadurch gekennzeichnet, dass**
das Schneiden der Öffnungshilfen (O₂) der jeweiligen Reihen (R₁, R₂) parallel zur Transportrichtung (T) der Materialbahn (M) versetzt zueinander erfolgt.

7. Verfahren nach zumindest einem der Ansprüche 1 bis 6,
**dadurch gekennzeichnet, dass**
das Schneiden zum Trennen der zumindest beiden Reihen (R₁, R₂) derart erfolgt, sodass die Summe der maximalen Breiten der Teilmaterialbahnen (R₁, R₂) größer ist als die Breite der Materialbahn (M).

8. Vorrichtung zum kontinuierlichen Herstellen von Filtern (1, 2), insbesondere Kaffeefiltern und dergleichen aus einer Materialbahn (M) und insbesondere geeignet zum Durchführen des Verfahrens gemäß zumindest einem der Ansprüche 1-7,
umfassend
a. Mittel zum Trennen von zumindest zwei sich parallel zur Transportrichtung der Materialbahn (M) erstreckenden Reihen (R₁, R₂) von Filterkonturen (1, 2) in jeweils eine Teilmaterialbahn (R₁, R₂) und
b. Mittel zum Vereinzeln der Filter der Teilmaterialbahnen (R₁, R₂),
wobei die Mittel zum Trennen der zumindest zwei Reihen (R₁, R₂) von Filterkonturen (1a, 2a) Mittel zur Erzeugung eines wellenförmigen Schnitts (S) umfassen
**dadurch gekennzeichnet, dass**
die Mittel zum Trennen Mittel zum Schneiden von Öffnungshilfen (O₂) für zumindest einen Filter (1, 2) einer Teilmaterialbahn (R₁, R₂), insbesondere für jeweils zumindest einen Filter (1, 2) beider Teilmaterialbahnen (R₁, R₂) umfassen.

9. Vorrichtung nach Anspruch 8,
**dadurch gekennzeichnet, dass**
die Mittel zum Vereinzeln der Filter (1, 2) der jeweiligen Teilmaterialbahnen (R₁, R₂) ein Schneidwerkzeug, insbesondere ein Messer, zum gleichzeitigen Vereinzeln der Filter (1, 2) der beiden Teilmaterialbahnen (R₁, R₂) umfassen.

10. Vorrichtung nach zumindest einem der Ansprüche 8-9,
**dadurch gekennzeichnet, dass**
die Mittel zur Erzeugung des wellenförmigen Schnitts (S) ein Schneidwerkzeug umfassen, welche zumindest teilweise im Wesentlichen parallel zur Kontur (1a, 2a) eines Filters (1, 2) der einen Reihe (R₁, R₂) von Filtern (1, 2) und/oder teilweise im Wesentlichen parallel zur Kontur (1 a, 2a) des zweiten Filters (1, 2) der zweiten Reihe (R₁, R₂) von Filtern (1, 2) schneidet.

11. Vorrichtung nach zumindest einem der Ansprüche 8-10,
**dadurch gekennzeichnet, dass**
die Mittel zum Schneiden der Öffnungshilfen (O₂) derart angeordnet sind, sodass das Schneiden der Öffnungshilfen (O₂) der jeweiligen Reihen (R₁, R₂) jeweils parallel in Transportrichtung (T) der Materialbahn (M) versetzt erfolgt.

## Claims

1. A method for the continuous production of filters, particularly coffee filters and the like, from a material web, including the steps of
a. cutting parallel to the transport direction (T) of the material web to divide at least two rows (R₁, R₂), which extend parallel to the transport direction (T) of the material web (M), of filter contours (1a, 2a) in a respective component material web (R₁, R₂) and
b. separating the filters of the respective component material webs (R₁, R₂), wherein the cutting to separate the at least two rows (R₁, R₂) into a respective component material web (R₁, R₂) is effected by way of a cut (S) with a sinuous shape,
**characterised in that** the method includes the cutting of an opening aid (O₂) in the contour (1a, 2a) of at least one filter (1, 2) of each row (R₁, R₂).

2. A method as claimed in Claim 1, **characterised in that** the at least two component material webs (R₁, R₂) are arranged above one another such that the separation of the filters (1, 2) of the respective component material webs (R₁, R₂) is effected by a common cut (S).

3. A method as claimed in one of Claims 1 and 2, **characterised in that** the cutting of the opening aid (O₂) is effected mirror-symmetrically to the central axis of the material web (M).

4. A method as claimed in at least one of Claims 1 to 3, **characterised in that** the sinuous cut (S) extends alternately substantially partially parallel to the contour (1a, 2a) of a filter (1, 2) of one row (R₁, R₂) and partially parallel to the contour (1a, 2a) of a filter (1, 2) of the other row (R₁, R₂) of the filters (1, 2).

5. A method as claimed in at least one of Claims 1 to 4, **characterised in that** the cutting of the opening aid (O₂) and the dividing of the at least two rows (R₁, R₂) into respective component material webs (R₁, R₂) is effected together by the cut (S) of sinuous shape.

6. A method as claimed in at least one of Claims 1 to 5, **characterised in that** the cutting of the opening aids (O₂) of the respective rows (R₁, R₂) is effected offset from one another parallel to the transport direction (T) of the material web (M).

7. A method as claimed in at least one of Claims 1 to 6, **characterised in that** the cutting to divide the at least two rows (R₁, R₂) is effected such that the sum of the maximum widths of the component material webs (R₁, R₂) is greater than the width of the material web (M).

8. Apparatus for the continuous production of filters (1, 2), particularly coffee filters and the like, from a material web (M) and, in particular, suitable for carrying out the method as claimed in at least one of Claims 1-7,
including
a. means for dividing at least two rows (R₁, R₂), extending parallel to the transport direction of the material web (M) of filter contours (1, 2) into a respective component material web (R₁, R₂) and
b. means for separating the filters of the component material webs (R₁, R₂), wherein the means for dividing the at least two rows (R₁, R₂) of filter contours (1a, 2a) include means for producing a sinuous cut (S),
**characterised in that** the means for dividing include means for cutting opening aids (O₂) for at least one filter (1, 2) of a component material web (R₁, R₂), particularly for at least one respective web (1, 2) of both component material webs (R₁, R₂).

9. Apparatus as claimed in Claim 8, **characterised in that** the means for separating the filters (1, 2) of the respective component material webs (R₁, R₂) include a cutting tool, particularly a knife, for simultaneously separating the filters (1, 2) of the two component material webs (R₁, R₂).

10. Apparatus as claimed in at least one of Claims 8-9, **characterised in that** the means for producing the sinuous cut (S) include a cutting tool, which cuts at least partially substantially parallel to the contour (1a, 2a) of a filter (1, 2) of one row (R₁, R₂) of filters (1, 2) and/or partially substantially parallel to the contour (1a, 2a) of the second filter (1, 2) of the second row (R₁, R₂) of filters (1, 2).

11. Apparatus as claimed in at least one of Claims 8-10, **characterised in that** the means for cutting the opening aids (O₂) are so arranged that the cutting of the opening aids (O₂) of the respective rows (R₁, R₂) is effected in each case parallel and offset in the transport direction (T) of the material web (M).

## Revendications

1. Procédé de fabrication en continu, à partir d'une bande de matériau, de filtres et notamment de filtres à café et de types similaires,
incluant les étapes consistant en
a. un sectionnement parallèle à la direction de transport (T) de ladite bande de matériau (M), en vue de séparer, en une bande partielle de matériau (R₁, R₂) respective, au moins deux rangées (R₁, R₂) de profils (1a, 2a) de filtres qui s'étendent parallèlement à ladite direction de transport (T) de ladite bande de matériau (M), et
b. une dissociation des filtres des bandes partielles de matériau (R₁, R₂) respectives, sachant que le sectionnement, visant à séparer les deux rangées (R₁, R₂) à présence minimale en une bande partielle de matériau (R₁, R₂) respective, est effectué pour l'essentiel à l'aide d'une coupe (S) dont le tracé est ondulé,
**caractérisé par le fait que**
ledit procédé inclut le sectionnement d'une aide à l'ouverture (O₂) dans le profil (1a, 2a) d'au moins un filtre (1, 2) de chacune des rangées (R₁, R₂).

2. Procédé selon la revendication 1,
**caractérisé par le fait que**
les deux bandes partielles de matériau (R₁, R₂) à présence minimale sont placées en superposition, de façon telle que la dissociation des filtres (1, 2) desdites bandes partielles respectives de matériau (R₁, R₂) soit effectuée par une coupe commune (S).

3. Procédé selon l'une des revendications 1 et 2,
**caractérisé par le fait que**
le sectionnement de l'aide à l'ouverture (O₂) s'opère spéculairement par rapport à l'axe médian de la bande de matériau (M).

4. Procédé selon au moins l'une des revendications 1 à 3,
**caractérisé par le fait que**
la coupe (S) au tracé ondulé s'étend en alternance, pour l'essentiel, en partie parallèlement au profil (1a, 2a) d'un filtre (1, 2) de l'une des rangées (R₁, R₂) et, en partie, parallèlement au profil (1a, 2a) d'un filtre (1, 2) de l'autre rangée (R₁, R₂) desdits filtres (1, 2).

5. Procédé selon au moins l'une des revendications 1 à 4,
**caractérisé par le fait que**
le sectionnement de l'aide à l'ouverture (O₂) et la séparation, en des bandes partielles de matériau (R₁, R₂) respectives, des deux rangées (R₁, R₂) à présence minimale, sont effectués conjointement par la coupe (S) au tracé ondulé.

6. Procédé selon au moins l'une des revendications 1 à 5,
**caractérisé par le fait que**
le sectionnement des aides à l'ouverture (O₂) des rangées respectives (R₁, R₂) s'opère avec décalage mutuel parallèlement à la direction de transport (T) de la bande de matériau (M).

7. Procédé selon au moins l'une des revendications 1 à 6,
**caractérisé par le fait que**
le sectionnement, visant à séparer les deux rangées (R₁, R₂) à présence minimale, est effectué de façon telle que la somme des largeurs maximales des bandes partielles de matériau (R₁, R₂) soit supérieure à la largeur de la bande de matériau (M).

8. Dispositif dévolu à la fabrication en continu, à partir d'une bande de matériau (M), de filtres (1, 2) et notamment de filtres à café et de types similaires, se prêtant particulièrement à la mise en oeuvre du procédé conforme à au moins l'une des revendications 1-7,
comprenant
a. des moyens conçus pour séparer, en une bande partielle de matériau (R₁, R₂) respective, au moins deux rangées (R₁, R₂) de profils (1a, 2a) de filtres qui s'étendent parallèlement à la direction de transport de ladite bande de matériau (M), et
b. des moyens conçus pour dissocier lesdits filtres des bandes partielles de matériau (R₁, R₂),
sachant que lesdits moyens, conçus pour séparer les deux rangées (R₁, R₂) de profils (1a, 2a) de filtres à présence minimale, incluent des moyens conçus pour effectuer une coupe (S) dont le tracé est ondulé,
**caractérisé par le fait que**
les moyens de séparation incluent des moyens conçus pour sectionner des aides à l'ouverture (O₂) dédiées à au moins un filtre (1, 2) d'une bande partielle de matériau (R₁, R₂), notamment à au moins un filtre respectif (1, 2) des deux bandes partielles de matériau (R₁, R₂).

9. Dispositif selon la revendication 8,
**caractérisé par le fait que**
les moyens, conçus pour dissocier les filtres (1, 2) des bandes partielles de matériau (R₁, R₂) respectives, incluent un outil de sectionnement se présentant notamment comme une lame affectée à la dissociation simultanée des filtres (1, 2) des deux bandes partielles de matériau (R₁, R₂).

10. Dispositif selon au moins l'une des revendications 8-9,
**caractérisé par le fait que**
les moyens, conçus pour effectuer la coupe (S) au tracé ondulé, incluent un outil de sectionnement opérant une découpe, au moins en partie, pour l'essentiel parallèlement au profil (1a, 2a) d'un filtre (1, 2) de l'une des rangées (R₁, R₂) de filtres (1, 2) et/ou en partie, pour l'essentiel, parallèlement au profil (1a, 2a) du second filtre (1, 2) de la seconde rangée (R₁, R₂) de filtres (1, 2).

11. Dispositif selon au moins l'une des revendications 8-10,
**caractérisé par le fait que**
les moyens, conçus pour sectionner les aides à l'ouverture (O₂), sont agencés de façon telle que le sectionnement des aides à l'ouverture (O₂) des rangées respectives (R₁, R₂) s'opère, à chaque fois, de manière parallèlement décalée dans la direction de transport (T) de la bande de matériau (M).
